(19) Europäisches Patentamt
European Patent Office
Office européen des brevets

(11) **EP 3 770 350 B1**

(12) **EUROPEAN PATENT SPECIFICATION**

(45) Date of publication and mention
of the grant of the patent:
**15.11.2023 Bulletin 2023/46**

(21) Application number: **19382618.7**

(22) Date of filing: **22.07.2019**

(51) International Patent Classification (IPC):
**E03D 9/08** *(2006.01)*    **F16K 7/17** *(2006.01)*

(52) Cooperative Patent Classification (CPC):
**E03D 9/08; F16K 11/022**

(54) **CLEANING WATER DISPENSING SYSTEM FOR A TOILET WITH BIDET FUNCTIONS, DISPENSING NOZZLE WITH SUCH SYSTEM, TOILET WITH SUCH NOZZLE, AND METHOD**

SPÜLWASSERABGABEVORRICHTUNG FÜR BIDETTOILETTE, SPRÜHVORRICHTUNG MIT DER SPÜLWASSERABGABEVORRICHTUNG, TOILETTE MIT DER SPRÜHVORRICHTUNG, UND EIN VERFAHREN

SYSTEME DE DISTRIBUTION D'EAU DE NETTOYAGE POUR TOILETTE A FONCTIONS DE BIDET, BUSE DE DISTRIBUTION AVEC UN TEL SYSTEME, TOILETTE AVEC TELLE BUSE ET PROCEDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.01.2021 Bulletin 2021/04**

(73) Proprietor: **Roca Sanitario, S. A.**
**08029 Barcelona (ES)**

(72) Inventor: **MUNAR SAURA, Miguel Angel**
**08029 Barcelona (ES)**

(74) Representative: **Ponti & Partners, S.L.P**
**Edifici PRISMA**
**Av. Diagonal núm. 611-613, Planta 2**
**08028 Barcelona (ES)**

(56) References cited:
**KR-B1- 101 664 852**

EP 3 770 350 B1

## Description

The present invention relates to a cleaning water dispensing system and method for a toilet with bidet functions, and to a cleaning water dispensing nozzle adapted to be used in said system. It also relates to a toilet with bidet functions provided with a cleaning unit that comprises said nozzle.

## Background of the invention

There is a wide range of toilets with bidet functions available in the market, also known as electronic bidets. These toilets or electronic bidets have seats that include a device comprising a water supply conduit and nozzle for anal and/or perineal cleaning, and typically also include a drying unit and means for heating the cleaning water comprising a tank with a heat source.

There are numerous types of dispensing systems in the prior art that include a water dispensing nozzle for anal and/or perineal cleaning, wherein the nozzle body comprises a plurality of water outlet conduits, each of which can dispense a flow or jet of water located at a predetermined position that varies according to the area which the user wants to clean (anal or perineal area). Document KR101664852B1 discloses a dispensing system of this type wherein the body of the cannula includes two water passage conduits, each one connecting to a water outlet conduit located in the nozzle body for dispensing a flow of water for either anal or perineal cleaning. The inner passage of each water outlet conduit includes sections of different sizes with an end opening specifically designed to provide a water jet suitable for either anal or perineal cleaning.

Water dispensing systems as that described in the aforementioned document have the drawback of providing a limited number of cleaning jets. Moreover, the water outlet conduits in the nozzles of these systems require the presence of small ducts designed to ensure the correct pressure and shape of the jet. However, these nozzle structures are expensive to manufacture and maintain.

In view of the foregoing, the need is apparent for a cleaning water dispensing system for a toilet with bidet functions that provides a greater number of cleaning jets by means of a dispensing nozzle with a simple structure, inexpensive to manufacture and to maintain.

## Description of the invention

The aim of the present invention is to provide a cleaning water dispensing system and nozzle for a toilet with bidet functions that overcomes the aforementioned drawbacks and presents the advantages described below.

According to this aim, in a first aspect the present invention provides a cleaning water dispensing system according to claim 1.

According to a second aspect, the present invention provides a water dispensing nozzle according to claim 11.

According to a third aspect, the present invention provides a toilet according to claim 12.

According to a fourth aspect, the present invention provides a method according to claim 13.

In the system of the present invention, the diaphragm membrane selectively regulates the water outlet through at least three water outlet conduits provided in the nozzle body so that each one provides a precise cleaning position that meets the various needs of the users. With the claimed system, the water exits the outlet conduits selectively due to the distribution of the predetermined flows $Q_A$ and $Q_B$ (hereinafter merely referred to "flows $Q_A$ and $Q_B$ ") received in the distribution chambers A and B defined by the diaphragm membrane arranged in an inner cavity of the nozzle body.

In this way a system is obtained with a dispensing nozzle having a very simple and compact structure that allows obtaining, by means of two water inlet ports, up to three water jets or streams in different cleaning positions that conform to the needs of the user. Moreover, the dispensing nozzle is very easy to maintain, as the diaphragm membrane defining the water distribution chambers A and B can be mounted removably to allow cleaning the nozzle body or replacing same if needed if it breaks.

According to the present invention, the diaphragm membrane is configured and arranged inside the cavity of the nozzle body such that it is able to come in contact with the first water outlet orifice of the second distribution chamber B to prevent passage of the water flow $Q_B$ entering through said first orifice, while water passage through the second outlet orifice remains open due to the effect of the water flow $Q_A$ entering from the first distribution chamber A on the diaphragm membrane.

According to the same invention, the diaphragm membrane is configured and arranged inside the cavity of the nozzle body such that in the absence of the water flow $Q_A$ entering the first distribution chamber A, said membrane is deformed/displaced to allow passage of the water flow $Q_B$ from the second chamber B through the first orifice, while said diaphragm membrane (6) simultaneously closing the water passage through the second outlet orifice of said chamber B.

In this way a system is obtained wherein the diaphragm membrane selectively regulates the water flow $Q_B$ in the water distribution chamber through either the first or second outlet orifice communicating with respective water outlet ducts, each one of the latter providing a precise cleaning position that conforms to the various needs of the users.

In this preferred embodiment the diaphragm membrane preferably comprises:

- a first membrane portion in the form of a dividing wall dividing the two water distribution chambers A and B, one inner face of said first membrane portion being able to come into contact with the first water outlet orifice of the second water distribution chamber B to prevent passage of the inlet water flow $Q_B$ from passing through the first orifice, and

- a stem extending from the inner face of the first membrane portion to pass through the second water outlet orifice, said stem comprising a second membrane portion able to come into contact with the second water outlet orifice to prevent the water flow $Q_B$ from passing through said orifice, when the diaphragm membrane is deformed/displaced by the effect of the water flow $Q_B$ entering the second distribution chamber B in the absence of the water flow $Q_A$ entering the first chamber A.

This configuration of the diaphragm membrane enables, in the absence of the water flow $Q_A$ in the first chamber A, the water flow $Q_B$ entering the second distribution chamber B to cause a deformation/displacement of the first membrane portion, which displaces upward the stem integrally attached to the second membrane portion, such that said second portion can be in contact with the second outlet orifice to prevent passage of the water flow $Q_B$ through said orifice. In this position of the diaphragm membrane the water exits the first orifice of the same water distribution chamber B when the first membrane portion is no longer in contact with said first orifice.

Advantageously, the diaphragm membrane comprises a perimeter flange sized so that it fits inside the cavity of the nozzle body.

Preferably, this perimeter flange is arranged on the perimeter of the first membrane portion which acts as a dividing wall between the water distribution chambers A and B.

According to one embodiment of the invention, the system comprises an impeller pump sized to simultaneously drive the water flows $Q_A$, $Q_B$ of both distribution chambers A, B through the respective water inlet conduits, wherein the hydraulic operation curve of the system is designed to provide a distribution of the water flows $Q_A$, $Q_B$ that allows equalising the water pressure in the distribution chambers A, B.

In this way it is possible to selectively regulate the water flow through the various water outlet conduits of the nozzle, designing a diaphragm membrane geometry for such purpose.

Preferably, the first water outlet orifice of the second distribution chamber B is communicated with a cleaning water outlet conduit that is connected to a plurality of water outlet ducts arranged in an anterior portion of the nozzle body, the water flow $Q_B$ of the second distribution chamber B being able to be dispensed out of the nozzle body through said plurality of outlet ducts, thereby obtaining a water stream or jet with a "perineal shower effect" in the anterior portion of the nozzle.

According to the preferred embodiment of the system, this type of water stream or jet with a "perineal shower effect" is obtained when the water flow $Q_B$ of the second distribution chamber B is evacuated through the first outlet orifice of said chamber B due to the deformation/displacement of the diaphragm membrane in the absence of the water flow $Q_A$ entering the first distribution chamber A.

Also preferably, the first water outlet orifice of the first distribution chamber A is communicated with a cleaning water outlet conduit that is connected to at least one water outlet duct arranged in a rear portion of the nozzle body, the water flow $Q_A$ of the first distribution chamber A being able to be dispensed out of the nozzle body through said cleaning water outlet duct, thereby obtaining a cleaning water jet preferably of the anal type.

According to the preferred embodiment of the system, this type of water stream or jet is obtained in the absence of the water flow $Q_B$ to the second water distribution chamber B, when all the water entering the first chamber is evacuated through a water outlet orifice of the first water distribution chamber A.

Also preferably, the second water outlet orifice of the second distribution chamber B is communicated with a cleaning water outlet conduit that is connected to at least two water outlet ducts arranged preferably adjacent to the water outlet duct of the first distribution chamber A, the water flow $Q_B$ of the second distribution chamber B being able to be dispensed out of the nozzle body through said cleaning water outlet ducts, while simultaneously dispensing the water flow $Q_A$ of the first water distribution chamber A.

In this way, when both chambers A and B receive their respective inlet water flows $Q_A$ and $Q_B$ the nozzle will simultaneously dispense both water flows $Q_A$ and $Q_B$ through the outlet orifice of the first chamber A and through the second water outlet orifice of the second chamber B, connected with their respective water outlet conduits.

According to an alternative embodiment, the nozzle body comprises a water outlet duct arranged to receive simultaneously the water flow $Q_A$ from the water outlet conduit of the first distribution chamber A and the water flow $Q_B$ from the water outlet ducts connected to the second water outlet orifice of the second distribution chamber B.

Advantageously, according to this alternative embodiment, the two water outlet ducts that are in communication with the second water outlet of the second water distribution chamber B are arranged such that they converge with the water flow $Q_A$ from the first chamber A inside the same outlet duct to dispense a turbulent flow $Q_A+Q_B$ with a "spray effect" through said outlet duct when the two chambers A and B receive incoming water flow.

In the absence of water flow in the second chamber B, the water outlet duct will evacuate only the water flow $Q_A$ received from the first distribution chamber A.

Preferably, the area $S_A$, $S_B$ of the cross section of the water outlet ducts in each of the outlet conduits has been designed considering the distribution of the flows $Q_A$, $Q_B$ in the two distribution chambers A, B to dispense water flows $Q_A$, $Q_B$ with substantially similar pressure, according to the relationship:

$$Q_A/Q_B = S_A/S_B$$

where:

$Q_A$ is the water flow distributed by the first distribution chamber A,

$Q_B$ is the water flow distributed by the second distribution chamber B,

$S_A$ is the area of the cross section of the water outlet ducts through which the water flow $Q_A$ is dispensed,

$S_B$ is the area of the cross section of the water outlet ducts through which the water flow $Q_B$ is dispensed.

This ensures that the water flows $Q_A$ and $Q_B$ of the two distribution chambers A and B are dispensed through the respective water outlet ducts with a substantially similar pressure. However, if the user wishes it, he can increase the overall pressure of the system by acting on the water impeller pump that supplies the water to both distribution chambers through the two inlet conduits of the dispensing nozzle body.

Preferably, the dispensing nozzle of the present invention comprises a nozzle body provided with a plurality of water outlet conduits for anal and/or perineal cleaning, and a diaphragm membrane for selective regulation of the water outlet through the plurality of conduits by distributing the flows $Q_A$, $Q_B$ in the two chambers A and B, the diaphragm membrane being housed in an inner cavity of the nozzle body provided, preferably, with a removable cover.

Advantageously, the nozzle bod is protected during use by a cosmetic casing provided with outlet orifices for the water arriving from the water outlet ducts of the nozzle.

Also advantageously, the nozzle comprises a connecting member for attachment to the cannula or conduit of the toilet cleaning unit, said connecting member including two water inlet conduits for respectively feeding the flows $Q_A$ and $Q_B$ to the first A and second B water distribution chambers.

Preferably, the dispensing nozzle is coupled removably to the end of a retractable conduit or cannula of the toilet cleaning unit.

In the present invention, "diaphragm membrane" is understood to mean preferably a membrane assembly of an elastomer material.

"Cannula of a cleaning unit of a toilet" is understood to mean preferably a water outlet conduit connected to a water supply reservoir or tank for anal and/or perineal cleaning in a toilet with bidet functions.

## Brief description of the drawings

In order to better understand the description made, a set of drawings has been provided which, schematically and solely by way of non-limiting example, represents a practical example of embodiment of the dispensing system and dispensing nozzle.

Figure 1 is a perspective exploded view of an embodiment of the water dispensing nozzle for anal and/or perineal cleaning of the present invention.

Figure 2 is a second perspective exploded view of the nozzle of figure 1 where the membrane is housed in the inner cavity of the nozzle body.

Figure 3 shows a perspective view of the nozzle of figure 1 with the body protected by the cosmetic casing.

Figure 4 shows a top and bottom perspective view of the diaphragm membrane of the embodiment of the nozzle of figure 1.

Figure 5 shows schematically by a sectional view and a perspective view the path followed by the water flow inside the body of the nozzle of the embodiment of figure 1 to obtain a first water stream or jet suitable for anal cleaning.

Figure 6 shows schematically by a sectional view and a perspective view the path followed by the water flow inside the body of the nozzle of the embodiment of figure 1 to obtain a second water stream or jet suitable for a more gentle anal cleaning.

Figure 7 shows schematically by a sectional view and a perspective view the path followed by the water flow inside the body of the nozzle of the embodiment of figure 1 to obtain a third water stream or jet with a "shower effect" for perineal cleaning.

Figure 8 shows schematically by a sectional view and a perspective view the path followed by the water flow inside the body of a second embodiment of the nozzle to obtain a second type of water stream or jet with a "spray effect" suitable for anal cleaning. This embodiment of the nozzle includes a water outlet duct that simultaneously receives the water flow from both distribution chambers A and B.

## Description of a preferred embodiment

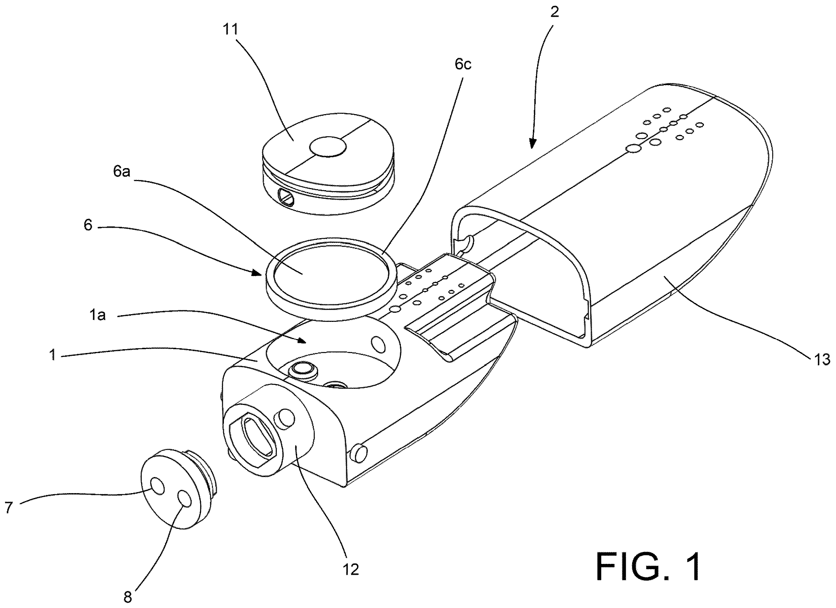

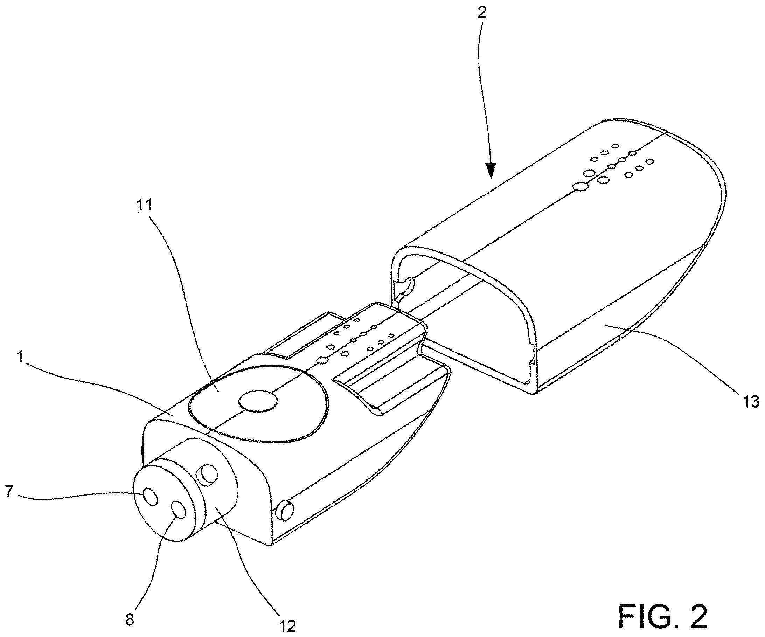

A preferred embodiment of the dispensing system and dispensing nozzle of the present invention is described below with reference to figures 1 to 8.

The dispensing system claimed comprises a water dispensing nozzle 2 with a nozzle body 1 provided with an inner cavity 1a that houses a diaphragm membrane 6 for selective regulation of the water outlet through a plurality of conduits 3, 4, 5 provided in the body 1 of said nozzle 2.

Preferably, the dispensing nozzle 2 is made from plastic, however, in other embodiments said nozzle 2 can be made from different materials.

The diaphragm membrane 6, preferably a membrane assembly of an elastomer material, is configured and arranged so as to define inside the cavity 1a;

- a first distribution chamber A of a first cleaning water flow $Q_A$, that is provided with an orifice 7a of entry of water from a first water inlet conduit 7, and
- a second distribution chamber B of a second cleaning water flow $Q_B$, that is provided with an orifice 8a of entry of water from a second water inlet conduit 8.

As shown in the exploded view of figure 1, the cavity 1a of the body 1 of the nozzle 2 is provided with a removable cover 11, so that the diaphragm membrane 6 can be easily removed to clean the body 1 of the nozzle 2, if necessary. Figure 1 also shows a cosmetic casing 13 meant to cover the body 1 of the nozzle 2 when it is in use, and a connecting member 12 that is present to allow coupling to the end of a cannula (not shown) of the cleaning unit of a toilet with bidet functions. As shown in figures 1 to 3, the connecting member 12 includes a connection for feeding the water inlet conduits 7, 8 of the respective water distribution chambers A and B of the body 1 of the nozzle 2.

In the present invention the hydraulic operation curve of the dispensing system has been designed to provide a distribution of flows $Q_A$ and $Q_B$ that allows equalising the water pressure in the two distribution chambers A and B provided by a water impeller pump of the system. In this way it is possible to selectively regulate the water flow through the water outlet conduits 3, 4, 5 of the nozzle 2, by suitably designing the geometry of the diaphragm membrane 6.

In the embodiment described, the geometry of the membrane 6 of the diaphragm defines a first portion 6a of the membrane 6 in the form of a dividing wall dividing the water distribution chambers A and B, that is configured and arranged inside the cavity 1a of the body 1 of the nozzle 2 to be in contact with a first water outlet orifice 4a of the second water distribution chamber B. Said membrane 6 comprises a stem 9 that extends from the inner face of the first portion 6a of the membrane 6 to pass through a second water outlet orifice 5a of the second distribution chamber B.

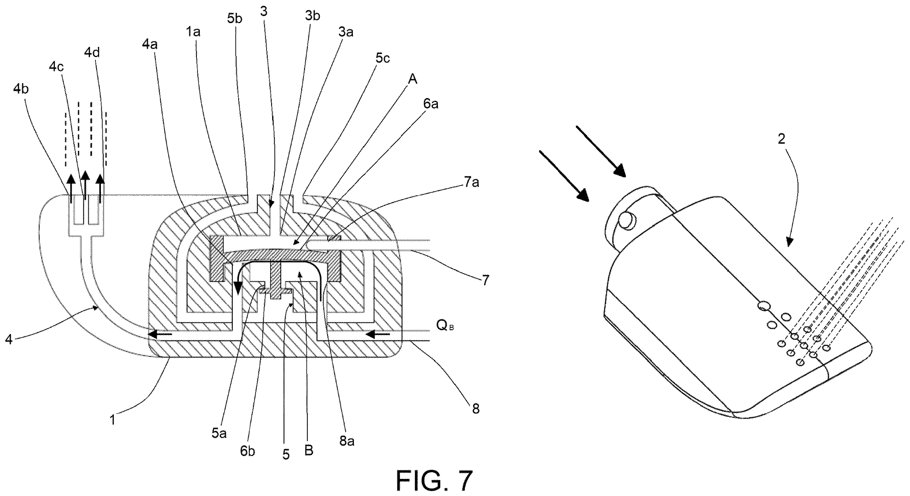

As shown in figure 7, the stem 9 is integrally attached to a second portion 6b of the membrane 6 that can be in contact with the second water outlet orifice 5a of the second water distribution chamber B to prevent passage of water through said orifice 5a when the diaphragm membrane 6 is deformed /displaced by the water flow $Q_B$ entering the second chamber B, in the absence of the water flow $Q_A$ in the first water distribution chamber A.

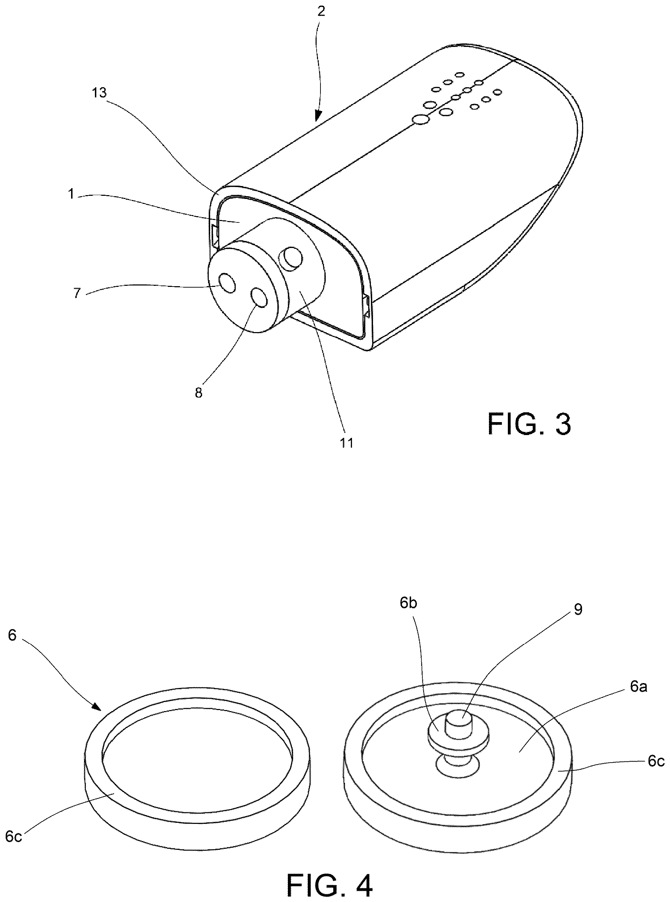

Figure 4 shows a top and bottom perspective view of an embodiment of the diaphragm membrane 6 where the first portion 6a and the second portion 6b of the membrane 6 have a substantially circular configuration, the first membrane portion 6a comprising a perimeter flange 6c sized to fit snugly inside the cavity 1a of the body 1 of the nozzle 2 (see figures 4 to 8).

As indicated in the description of the invention, the system claimed has the advantage of including a dispensing nozzle 2 that has a very simple and compact structure and allows obtaining, with two water inlet ports, up to three water streams or jets in precise cleaning positions that conform to the needs of the user.

The operation of the dispensing system in order to obtain different types of water streams or jets for anal and/or perineal cleaning with the embodiment of the nozzle of figures 1 to 7 is described below.

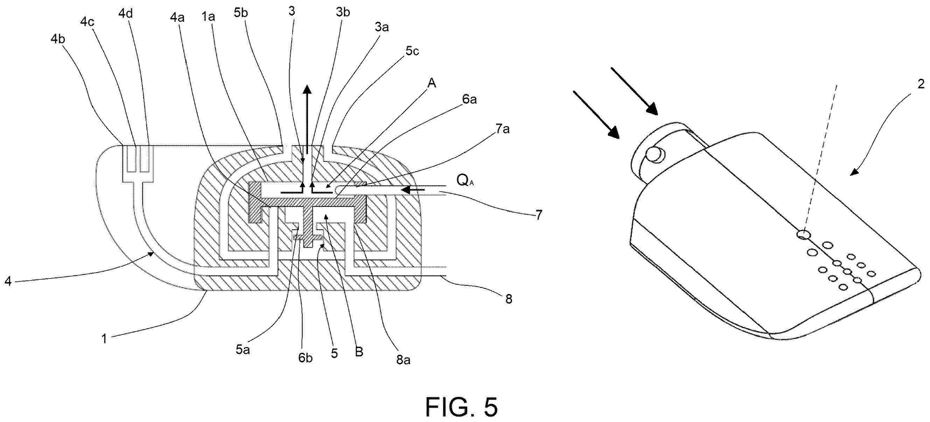

A first type of water stream or jet can be obtained when the entire water flow $Q_A$ of the first distribution chamber A is dispensed through a water outlet orifice 3a that is in communication with a water outlet conduit 3 connected to a single water outlet duct 3b, specifically appropriate for anal cleaning (see figure 5).

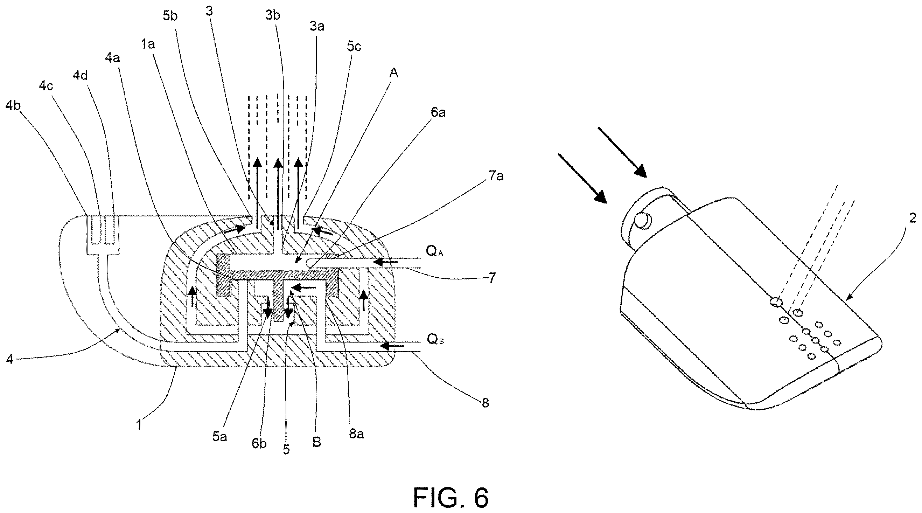

A second type of water stream or jet can be obtained when the water flow $Q_B$ of the second distribution chamber B is dispensed through a second orifice 5a of chamber B that is in communication with a water outlet conduit 5 connected to two water outlet ducts 5b, 5c placed adjacent to the water outlet duct 3b of the water outlet conduit 3 of the first distribution chamber A. In this case, the water flow $Q_B$ of the second distribution chamber B is dispensed out of the body 1 of the nozzle 2 through the second outlet orifice 5a connected to the outlet conduits 5b, 5c, while the first outlet orifice 4a of said distribution chamber B remains closed by the pressure of the water flow $Q_A$ entering the first water distribution chamber A. This provides a jet including the water flows $Q_A$ and $Q_B$, which is particularly suitable for a more gentle anal cleaning (see figure 6).

A third type of water stream or jet can be obtained when the water flow $Q_B$ of the second distribution chamber B exits through the first orifice 4a that is in communication with a water outlet conduit 4 connected to a plurality of water outlet ducts 4b, 4c, 4d provided in the anterior portion of the body 1 of the nozzle 2. In this case, in the absence of a water flow $Q_A$ in the first chamber A, the water flow $Q_B$ entering the second distribution chamber B will deform/displace the diaphragm membrane 6, thereby displacing the stem 9 integrally attached to the second portion 5b of the membrane 6 to allow said second portion 6b of the membrane 6 to close passage of water through the second orifice 5a, simultaneously opening water passage through the first orifice 4a that is in communication with the plurality of ducts 4b, 4c, 4d of the outlet conduit 4. In this way a water stream or jet is obtained with a "perineal shower effect" in the anterior portion of the nozzle 2 (see figure 7).

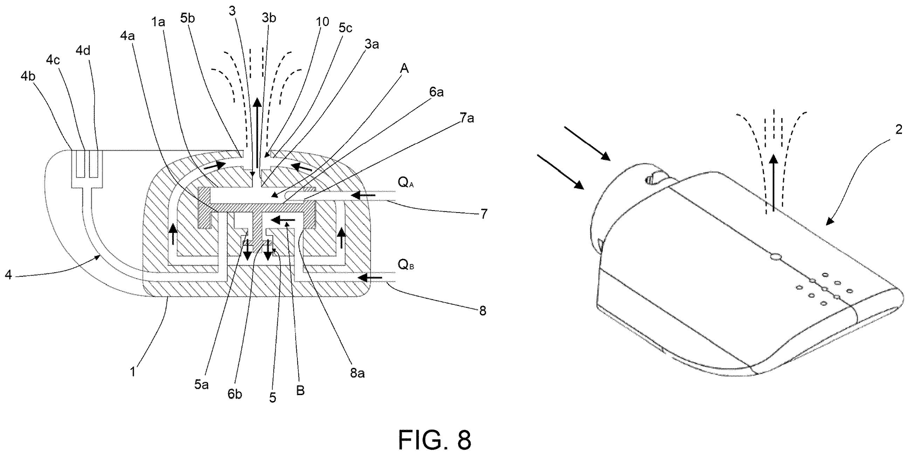

According to an alternative embodiment of the nozzle 2, shown in figure 8, the body 1 of the nozzle 2 comprises a water outlet duct 10 arranged to receive simultaneously the water flow $Q_A$ from the water outlet conduit 3 of the first distribution chamber A and the water flow $Q_B$ from the water outlet ducts 5b, 5c connected to the second water outlet orifice 5a of the second distribution chamber B. As shown in figure 8, the two water outlet ducts 5b, 5c of the conduit 5 are arranged such that they cross the water flow $Q_A$ arriving from the first distribution chamber A to dispense a turbulent flow $Q_A+Q_B$ with a "spray effect" through said water outlet duct 10. In the absence of the water flow $Q_B$ of the second chamber B, said outlet duct 10 will supply the water flow $Q_A$ from the first distribution chamber A without the "spray effect".

In the present invention, to ensure that the water flows $Q_A$ and $Q_B$ of the two distribution chambers A and B are dispensed through the corresponding water outlet ducts 3b, 5b, 5c, 4b, 4c, 4d with a substantially similar pressure, the area $S_A$, $S_B$ of the cross section of the water outlet ducts 3b, 5b, 5c, 4b, 4c, 4d of each outlet conduit 3, 4, 5 has been designed considering the distribution of the flows $Q_A$, $Q_B$ of the distribution chambers A, B to dispense water flows $Q_A$, $Q_B$ with a substantially similar pressure, according to the relationship:

- ■

$$Q_A/Q_B=S_A/S_B$$

where:

    $Q_A$ is the water flow distributed by the first distribution chamber A,
    $Q_B$ is the water flow distributed by the second distribution chamber B,
    $S_A$ is the area of the cross section of the water outlet ducts 3b, 10 through which the water flow $Q_A$ is dispensed,
    $S_B$ is the area of the cross section of the water outlet ducts 4b, 4c, 4d, 5b, 5c through which the water flow $Q_B$ is dispensed.

However, if the user wishes the water pressure can be increased by actuating the water impeller pump to obtain water jets with a higher pressure. In any case, the pressure of each stream will be substantially identical.

Although reference has been made to a specific embodiment of the invention, it is clear to a person skilled in the art that the dispensing system and nozzle 2 described are susceptible to numerous variations and modifications, and that all the details mentioned can be replaced by other technically equivalent ones, without departing from the scope of protection defined by the attached claims. For example, although a nozzle 2 provided with a connecting member 12 for removable union to a cannula (not shown) has been described, the same nozzle 2 could be formed at a distal portion of the body of the cannula of the toilet cleaning unit. Similarly, although a diaphragm membrane 6 has been described that is mounted removably in the inner cavity 1a of the body 1 of the nozzle 2, the same membrane 6 could be mounted permanently in the cavity 1a of the body 1 of the nozzle 2. Likewise, although an embodiment of the system has been described wherein the nozzle 2 produces three different types of waterjets, the same system could be configured to provide more than three different waterjets in the same body 1 of the nozzle 2 with the same diaphragm membrane 6 with two or more water inlet conduits.

## Claims

1. Cleaning water dispensing system for a toilet with bidet functions, the cleaning water dispensing system comprising a water dispensing nozzle (2) for anal and/or perineal cleaning, wherein the nozzle (2) comprises a body (1) provided with a plurality of water outlet conduits (3, 4, 5) able to dispense a predetermined flow ($Q_A$, $Q_B$) of cleaning water through the body (1) of the nozzle (2), **<u>characterised in that</u>** the system further comprises a diaphragm membrane (6) for selective regulation of water outlet through said water outlet conduits (3, 4, 5), wherein said diaphragm membrane (6) is housed in an inner cavity (1a) of the body (1) of the nozzle (2) so as to define;

    ■ a first distribution chamber (A) of a first predetermined flow ($Q_A$) of cleaning water, the first distribution chamber (A) being provided with an orifice (7a) of water inlet from a first water inlet conduit (7) of the body (1) of the nozzle (2) dispensing the first predetermined flow ($Q_A$), said first distribution chamber (A) comprising at least one water outlet orifice (3a) communicating with at least one water outlet conduit (3) of the water outlet conduits (3, 4, 5); and
    ■ a second distribution chamber (B) of a second predetermined flow ($Q_B$) of cleaning water, the second distribution chamber (B) being provided with an orifice (8a) of water inlet from a second water inlet conduit (8) of the body (1) of the nozzle (2) dispensing the second predetermined flow ($Q_B$), said second distribution chamber (B) comprising at least a first (4a) and a second (5a) water outlet orifices communicating with their corresponding cleaning water outlet conduits (4, 5) of the water outlet conduits (3, 4, 5); wherein said diaphragm membrane (6) is configured and arranged inside the cavity (1a) of the body (1) of the nozzle (2) such that it is able to selectively regulate water outlet through at least one of the water outlet conduits (3, 4, 5) of the nozzle (2);

- by said diaphragm membrane (6) coming into contact with the first water outlet orifice (4a) of the second distribution chamber (B) to prevent passage of the second predetermined water flow ($Q_B$) through said first water outlet orifice (4a), while water passage through the second water outlet orifice (5a) remains open for the second predetermined water flow ($Q_B$), due to the effect of the first predetermined water flow ($Q_A$) entering the first distribution chamber (A) and acting on the diaphragm membrane (6), and;

- by, in the absence of the first predetermined water flow ($Q_A$) entering the first distribution chamber (A) said diaphragm membrane (6) being deformed/displaced due to the effect of the second predetermined water flow ($Q_B$) entering the second water distribution chamber (B) and acting on the diaphragm membrane (6) to allow passage of the second predetermined water flow ($Q_B$) through the first water outlet orifice (4a), while said diaphragm membrane (6) simultaneously closing the water passage of the second predetermined water flow ($Q_B$) through the second water outlet orifice (5a) of the second water distribution chamber (B).

2. Cleaning water dispensing system according to claim 1, wherein the diaphragm membrane (6) comprises:

   - a first membrane portion (6a) in the form of a dividing wall dividing the inner cavity (1a) into the two water distribution chambers (A, B), one inner face of said first membrane portion (6a) being able to come into contact with the first water outlet orifice (4a) of the second water distribution chamber (B) to close passage of water through the first orifice (4a), and
   - a stem (9) extending from the inner face of the first membrane portion (6a) to pass through the second water outlet orifice (5a), said stem (9) comprising a second membrane portion (6b) able to come into contact with the second water outlet orifice (5a) to prevent the second predetermined flow ($Q_B$) from passing through said second water outlet orifice (5a) when the diaphragm membrane (6) is deformed/displaced by the effect of the second predetermined flow ($Q_B$) entering the second distribution chamber (B) in the absence of the first predetermined flow ($Q_A$) entering the first distribution chamber (A).

3. Cleaning water dispensing system according to any of claims 1 to 2, wherein the diaphragm membrane (6) comprises a perimeter flange (6c) sized to fit inside the cavity (1a) of the body (1) of the nozzle (2).

4. Cleaning water dispensing system according to any of claims 1 to 3 comprising an impeller pump sized to simultaneously drive the predetermined water flows ($Q_A$, $Q_B$) of both distribution chambers (A, B) through the respective first and second water inlet conduits (7, 8) of the chambers (A, B), wherein the hydraulic operation curve of the system is designed to provide a distribution of the predetermined flows ($Q_A$, $Q_B$) that allows equalising the water pressure in the distribution chambers (A, B).

5. Cleaning water dispensing system according to any of claims 1 to 4, wherein the first water outlet orifice (4a) of the second distribution chamber (B) is communicated with a water outlet conduit (4) of the water outlet conduits (3, 4, 5) which conduit (4) is connected to a plurality of water outlet ducts (4b, 4c, 4d) arranged in an anterior portion of the body (1) of the nozzle (2), the second predetermined flow ($Q_B$) of the second distribution chamber (B) being able to be dispensed out of the body (1) of the nozzle (2) through said plurality of outlet ducts (4b, 4c, 4d) so as to obtain a waterjet or flow with a perineal shower effect.

6. Cleaning water dispensing system according to any of claims 1 to 3, wherein the at least one water outlet orifice (3a) of the first distribution chamber (A) is communicated with a water outlet conduit (3) of the water outlet conduits (3, 4, 5), which first outlet conduit (3) is connected to at least one water outlet duct (3b) arranged in a rear portion of the body (1) of the nozzle (2), wherein the first predetermined flow ($Q_A$) of the first distribution chamber (A) is susceptible to be dispensed out of the body (1) of the nozzle (2) through said at least one water outlet duct (3b) so as to obtain the first predetermined flow ($Q_A$) appropriate for anal cleaning.

7. Cleaning water dispensing system according to claim 6, wherein the second water outlet orifice (5a) of the second distribution chamber (B) is communicated with a water outlet conduit (5) of the water outlet conduits (3, 4, 5) that is connected to at least two water outlet ducts (5b, 5c), wherein the second predetermined flow ($Q_B$) of the second distribution chamber (B) is able to be dispensed out of the body (1) of the nozzle (2) through both water outlet ducts (5b, 5c), while simultaneously dispensing the first predetermined flow ($Q_A$) arriving from the first water distribution chamber (A).

8. Cleaning water dispensing system according to claims 6 and 7, wherein the body (1) of the nozzle (2), comprises a water outlet duct (10) arranged to receive simultaneously the first predetermined flow ($Q_A$) from the water outlet conduit (3) of the first distribution chamber (A) and the second predetermined flow $(Q_B)$ from the water outlet ducts (5b, 5c) of the water outlet conduit (5) from the second distribution chamber (B).

9. Cleaning water dispensing system according to claim 8, wherein the two outlet ducts (5b, 5c) of the outlet conduit (5) are arranged such that they converge with the first predetermined flow $(Q_A)$ of the first chamber to dispense a turbulent water flow of the first and second predetermined flow $(Q_A+Q_B)$ with a spray effect through the same outlet duct (10).

10. Cleaning water dispensing system according to any of claims 1 to 9, wherein, the area $(S_A, S_B)$ of the cross section of the water outlet ducts (3b, 4b, 4c, 4d, 5b, 5c) of each of the outlet conduits (3, 4, 5) are designed considering the distribution of the first and second predetermined flow $(Q_A, Q_B)$ in the two distribution chambers (A, B) to dispense the first and second predetermined flow $(Q_A, Q_B)$ with substantially similar pressure, according to the relationship:

   ■

$$Q_A/Q_B = S_A/S_B$$

   where:

   $Q_A$ is the first predetermined water flow distributed by the first distribution chamber (A);
   $Q_B$ is the second predetermined water flow distributed by the second distribution chamber (B);
   $S_A$ is the area of the cross section of the water outlet ducts (3b, 10) through which the first predetermined flow $(Q_A)$ is dispensed;
   $S_B$ is the area of the cross section of the water outlet ducts (4b, 4c, 4d or 5b, 5c) through which the second predetermined flow $(Q_B)$ is dispensed.

11. Dispensing nozzle (2) for a cleaning unit of a toilet with bidet function **characterised in that** it is adapted to dispense water by means of the system according to any of claims 1 to 10.

12. Toilet with bidet functions **characterised in that** a cleaning unit of said toilet comprises a dispensing nozzle (2) according to claim 11.

13. Method of dispensing a predetermined water flow by means of the system according to any of claims 1 to 10, comprising, selectively, the step of;

   a) dispensing the second predetermined flow $(Q_B)$ through the second water outlet orifice (5a) of the second water distribution chamber (B) while a first water outlet orifice (4a) of the same water distribution chamber (B) remains closed due to the effect of the first predetermined flow $(Q_A)$ entering the first distribution chamber (A) on the diaphragm membrane (6) located in the cavity (1a) of the body (1) of the nozzle (2), and the step of;
   b) deforming/displacing the diaphragm membrane (6) located in the cavity (1a) of the body (1) of the nozzle (2) by the second predetermined flow $(Q_B)$ entering the second chamber (B), to dispense said second predetermined flow $(Q_B)$ through the first water outlet orifice (4a) of the second water distribution chamber (B), in the absence of the first predetermined flow $(Q_A)$ in the first distribution chamber (A).

**Patentansprüche**

1. Reinigungswasserabgabesystem für eine Toilette mit Bidetfunktionen, wobei das Reinigungswasserabgabesystem eine Wasserabgabedüse (2) für anale und/oder perineale Reinigung umfasst, wobei die Düse (2) einen Körper (1) umfasst, der mit mehreren Wasserauslassleitungen (3, 4, 5) versehen ist, die in der Lage sind, einen vorbestimmten Fluss $(Q_A, Q_B)$ von Reinigungswasser durch den Körper (1) der Düse (2) abzugeben, **dadurch gekennzeichnet, dass** das System eine Diaphragmamembran (6) zur selektiven Regulierung des Wasserauslasses durch die Wasserauslassleitungen (3, 4, 5) umfasst, wobei die Diaphragmamembran (6) in einem inneren Hohlraum (1a) des Körpers (1) der Düse (2) untergebracht ist, um so zu definieren;

   ■ eine erste Verteilkammer (A) für einen ersten vorbestimmten Fluss $(Q_A)$ von Reinigungswasser, wobei die erste Verteilkammer (A) mit einer Öffnung (7a) für Wassereinlass von einer ersten Wassereinlassleitung (7) des Körpers (1) der Düse (2) versehen ist, die den ersten vorbestimmten Fluss $(Q_A)$ abgibt, wobei die erste Verteilkammer (A) mindestens eine Wasserauslassöffnung (3a) umfasst, die mit mindestens einer Wasserauslassleitung (3) der Wasserauslassleitungen (3, 4, 5) in Verbindung steht, und
   ■ eine zweite Verteilkammer (B) für einen zweiten vorbestimmten Fluss $(Q_B)$ von Reinigungswasser, wobei die zweite Verteilkammer (B) mit einer Öffnung (8a) für Wassereinlass von einer zweiten Wassereinlassleitung (8) des Körpers (1) der Düse (2) versehen ist, die den zweiten vorbestimmten Fluss $(Q_B)$ abgibt, wobei die zweite Verteilkammer (B) mindestens eine erste (4a) und eine zweite (4b) Wasserauslassöffnung umfasst, die mit ihren entsprechenden Reinigungswasserauslassleitungen (4, 5) der Wasserauslassleitungen (3, 4, 5) in Verbindung stehen, wobei die Diaphragmamembran (6) so konfiguriert und innerhalb des Hohlraums (1a) des Körpers (1) der Düse (2) angeordnet ist, dass sie in der Lage ist, den Wasserauslass durch mindestens eine der Wasserauslassleitungen (3, 4, 5) der Düse (2) selektiv zu regulieren.

■ indem die Diaphragmamembran (6) mit der ersten Wasserauslassöffnung (4a) der zweiten Verteilkammer (B) in Kontakt kommt, um Durchgang des zweiten vorbestimmten Wasserflusses (Q_B) durch die erste Wasserauslassöffnung (4a) zu verhindern, während Wasserdurchgang durch die zweite Wasserauslassöffnung (5a) für den zweiten vorbestimmten Wasserfluss (Q_B) aufgrund der Wirkung des ersten vorbestimmten Wasserflusses (Q_A), der in die erste Verteilkammer (A) eintritt und auf die Diaphragmamembran (6) wirkt, offen bleibt und

■ indem bei Abwesenheit des ersten vorbestimmten Wasserflusses (Q_A), der in die erste Verteilkammer (A) eintritt, wobei die Diaphragmamembran (6) aufgrund der Wirkung des zweiten vorbestimmten Wasserflusses (Q_B), der in die zweite Wasserverteilkammer (B) eintritt und auf die Diaphragmamembran (6) einwirkt, um Durchgang des zweiten vorbestimmten Wasserflusses (Q_B) durch die erste Wasserauslassöffnung (4a) zu ermöglichen, verformt/verlagert wird, während die Diaphragmamembran (6) gleichzeitig den Wasserdurchgang des zweiten vorbestimmten Wasserflusses (Q_B) durch die zweite Wasserauslassöffnung (5a) der zweiten Wasserverteilkammer (B) verschließt.

2. Reinigungswasserabgabesystem nach Anspruch 1, wobei die Diaphragmamembran (6) umfasst:

■ einen ersten Membranabschnitt (6a) in Form einer Trennwand, die den inneren Hohlraum (1a) in die beiden Wasserverteilkammern (A, B) unterteilt, wobei eine Innenseite des ersten Membranabschnitts (6a) in der Lage ist, mit der ersten Wasserauslassöffnung (4a) der zweiten Wasserverteilkammer (B) in Kontakt zu kommen, um Wasserdurchgang durch die erste Öffnung (4a) zu schließen, und

■ einen Schaft (9), der sich von der Innenseite des ersten Membranabschnitts (6a) aus erstreckt, um durch die zweite Wasserauslassöffnung (5a) zu gelangen, wobei der Schaft (9) einen zweiten Membranabschnitt (6b) umfasst, der in der Lage ist, mit der zweiten Wasserauslassöffnung (5a) in Kontakt zu kommen, um zu verhindern, dass der zweite vorbestimmte Fluss (Q_B) durch die Wasserauslassöffnung (5a) durchfließt, wenn die Diaphragmamembran (6) durch die Wirkung des zweiten vorbestimmten Flusses (Q_B), der in die zweite Verteilkammer (B) eintritt, in Abwesenheit des ersten vorbestimmten Flusses (Q_A), der in die erste Verteilkammer (A) eintritt, verformt/verlagert wird.

3. Reinigungswasserabgabesystem nach einem der Ansprüche 1 bis 2, wobei die Diaphragmamembran (6) einen Umfangsflansch (6c) umfasst, der so bemessen ist, dass er in den Hohlraum (1a) des Körpers (1) der Düse (2) passt.

4. Reinigungswasserabgabesystem nach einem der Ansprüche 1 bis 3, umfassend eine Flügelradpumpe, die so bemessen ist, dass sie die vorbestimmten Flüsse (Q_A, Q_B) beider Verteilkammern (A, B) gleichzeitig durch die jeweilige erste und zweite Wassereinlassleitung (7, 8) der Kammern (A, B) treibt, wobei die hydraulische Betriebskurve des Systems so ausgelegt ist, dass sie eine Verteilung der vorbestimmten Flüsse (Q_A, Q_B) vorsieht, die einen Ausgleich des Wasserdrucks in den Verteilkammern (A, B) ermöglicht.

5. Reinigungswasserabgabesystem nach einem der Ansprüche 1 bis 4, wobei die erste Wasserauslassöffnung (4a) der zweiten Verteilkammer (B) mit einer Wasserauslassleitung (4) der Wasserauslassleitungen (3, 4, 5) verbunden ist, wobei Leitung (4) mit mehreren Wasserauslasskanälen (4b, 4c, 4d) verbunden ist, die in einem vorderen Abschnitt des Körpers (1) der Düse (2) angeordnet sind, wobei der zweite vorbestimmte Fluss (Q_B) der zweiten Verteilkammer (B) in der Lage ist, aus dem Körper (1) der Düse (2) durch die mehreren Auslasskanäle (4b, 4c, 4d) abgegeben zu werden, um einen Wasserstrahl oder -fluss mit einem perinealen Duscheffekt zu erhalten.

6. Reinigungswasserabgabesystem nach einem der Ansprüche 1 bis 3, wobei die mindestens eine Wasserauslassöffnung (3a) der ersten Verteilkammer (A) mit einer Wasserauslassleitung (3) der Wasserauslassleitungen (3, 4, 5) verbunden ist, wobei die erste Wasserauslassleitung (3) mit mindestens einem Wasserauslasskanal (3b) verbunden ist, der in einem hinteren Abschnitt des Körpers (1) der Düse (2) angeordnet ist, wobei der erste vorbestimmte Fluss (Q_A) der ersten Verteilkammer (A) aus dem Körper (1) der Düse (2) geeignet ist, durch den mindestens einen Wasserauslasskanal (3b) abgegeben zu werden, um den ersten vorbestimmten Fluss (Q_A) zu erhalten, der für die Analreinigung geeignet ist.

7. Reinigungswasserabgabesystem nach Anspruch 6, wobei die zweite Wasserauslassöffnung (5a) der zweiten Verteilkammer (B) mit einer Wasserauslassleitung (5) der Wasserauslassleitungen (3, 4, 5) in Verbindung steht, die mit mindestens zwei Wasserauslasskanälen (5b, 5c) verbunden ist, wobei der zweite vorbestimmte Fluss ($Q_B$) der zweiten Verteilkammer (B) aus dem Körper (1) der Düse (2) in der Lage ist, durch beide Wasserauslasskanäle (5b, 5c) ausgegeben zu werden, während gleichzeitig der erste vorbestimmte Fluss ($Q_A$) ausgegeben wird, der von der ersten Wasserverteilkammer (A) kommt.

8. Reinigungswasserabgabesystem nach Anspruch 6 und 7, wobei der Körper (1) der Düse (2) einen Wasserauslasskanal (10) umfasst, der angeordnet ist, um gleichzeitig den ersten vorbestimmten Fluss ($Q_A$) aus der Wasserauslassleitung (3) der ersten Verteilkammer (A) und den zweiten vorbestimmten Fluss ($Q_B$) aus den Wasserauslasskanälen (5b, 5c) der Wasserauslassleitung (5) aus der zweiten Verteilkammer (B) aufzunehmen.

9. Reinigungswasserabgabesystem nach Anspruch 8, wobei die beiden Auslasskanäle (5b, 5c) der Auslassleitung (5) so angeordnet sind, dass sie mit dem ersten vorbestimmten Fluss ($Q_A$) der ersten Kammer konvergieren, um einen turbulenten Wasserfluss des ersten und zweiten vorbestimmten Flusses ($Q_A+Q_B$) mit einem Sprüheffekt durch denselben Auslasskanal (10) abzugeben.

10. Reinigungswasserabgabesystem nach einem der Ansprüche 1 bis 9, wobei die Fläche ($S_A$ , $S_B$) des Querschnitts der Wasserauslasskanäle (3b, 4b, 4c, 4d, 5b, 5c) jeder der Auslassleitungen (3, 4, 5) unter Berücksichtigung der Verteilung des ersten und zweiten vorbestimmten Flusses ($Q_A$, $Q_B$) in den beiden Verteilkammern (A, B) so ausgelegt sind, um den ersten und zweiten vorbestimmten Fluss($Q_A$ , $Q_B$) mit im Wesentlichen gleichem Druck gemäß der Beziehung abzugeben:

   ■

$$Q_A/Q_B \;=\; S_A/S_B$$

wobei:

$Q_A$ der erste vorbestimmte Fluss ist, der von der ersten Verteilkammer (A) verteilt wird;
$Q_B$ der zweite vorbestimmte Fluss ist, der von der zweiten Verteilkammer (B) verteilt wird;
$S_A$ die Fläche des Querschnitts der Wasserauslasskanäle (3b, 10) ist, durch die der vorbestimmte Fluss ($Q_A$) abgegeben wird;
$S_B$ die Fläche des Querschnitts der Wasserauslasskanäle (4b, 4c, 4d oder 5b, 5c) ist, durch die der zweite vorbestimmte Fluss ($Q_B$) abgegeben wird.

11. Abgabedüse (2) für eine Reinigungseinheit einer Toilette mit Bidetfunktion, **dadurch gekennzeichnet, dass** sie ausgelegt ist, Wasser mittels des Systems nach einem der Ansprüche 1 bis 10 abzugeben.

12. Toilette mit Bidetfunktionen, **dadurch gekennzeichnet, dass** eine Reinigungseinheit der Toilette eine Abgabedüse (2) nach Anspruch 11 umfasst.

13. Verfahren zur Abgabe eines vorbestimmten Wasserflusses mittels des Systems nach einem der Ansprüche 1 bis 10, umfassend selektiv den Schritt des;

   a) Abgebens des zweiten vorbestimmten Flusses ($Q_B$) durch die zweite Wasserauslassöffnung (5a) der zweiten Wasserverteilkammer (B), während eine erste Wasserauslassöffnung (4a) derselben Wasserverteilkammer (B) aufgrund der Wirkung des ersten vorbestimmten Flusses ($Q_A$), der in die erste Verteilkammer (A) eintritt, auf die Diaphragmamembran (6), die sich in dem Hohlraum (1a) des Körpers (1) der Düse (2) befindet, geschlossen bleibt, und den Schritt des;
   b) Verformens/Verlagerns der in dem Hohlraum (1a) des Körpers (1) der Düse (2) befindlichen Diaphragmamembran (6) durch den zweiten vorbestimmten Fluss ($Q_B$), der in die zweite Kammer (B) eintritt, um den zweiten vorbestimmten Fluss ($Q_B$) durch die erste Wasserauslassöffnung (4a) der zweiten Wasserverteilkammer (B) in Abwesenheit des ersten vorbestimmten Flusses ($Q_A$) in der ersten Verteilkammer (A) abzugeben.

## Revendications

1. Système de distribution d'eau de lavage pour des toilettes dotées de fonctions de bidet, le système de distribution d'eau de lavage comprenant une buse de distribution d'eau (2) pour un lavage anal et/ou périnéal, dans lequel la buse (2) comprend un corps (1) pourvu d'une pluralité de conduits de sortie d'eau (3, 4, 5) aptes à distribuer un flux ($Q_A$, $Q_B$) prédéterminé d'eau de lavage à travers le corps (1) de la buse (2), **caractérisé en ce que** le système comprend en outre une membrane diaphragme (6) pour une régulation sélective d'une sortie d'eau à travers lesdits conduits de sortie d'eau (3, 4, 5), dans lequel ladite membrane diaphragme (6) est logée dans une cavité interne (1a) du corps (1) de la buse (2) de sorte à définir :

   ■ une première chambre de distribution (A) d'un premier flux ($Q_A$) prédéterminé d'eau de lavage, la première chambre de distribution (A) étant pourvue d'un orifice (7a) d'entrée d'eau depuis un premier conduit d'entrée d'eau (7) du corps (1) de la buse (2) distribuant le premier flux (Q$_A$) prédéterminé, ladite première chambre de distribution (A) comprenant au moins un orifice de sortie d'eau (3a) communiquant avec au moins un conduit de sortie d'eau (3) des conduits de sortie d'eau (3, 4, 5) ; et

• une seconde chambre de distribution (B) d'un second flux (Q$_B$) prédéterminé d'eau de lavage, la seconde chambre de distribution (B) étant pourvue d'un orifice (8a) d'entrée d'eau depuis un second conduit d'entrée d'eau (8) du corps (1) de la buse (2) distribuant le second flux (Q$_B$) prédéterminé, ladite seconde chambre de distribution (B) comprenant au moins un premier (4a) et un second (5a) orifices de sortie d'eau communiquant avec leurs conduits de sortie d'eau de lavage (4, 5) correspondants des conduits de sortie d'eau (3, 4, 5) ;

dans lequel ladite membrane diaphragme (6) est configurée et agencée à l'intérieur de la cavité (1a) du corps (1) de la buse (2) de telle sorte qu'elle est apte à réguler sélectivement une sortie d'eau à travers au moins un des conduits de sortie d'eau (3, 4, 5) de la buse (2) ;

• par l'entrée en contact de ladite membrane diaphragme (6) avec le premier orifice de sortie d'eau (4a) de la seconde chambre de distribution (B) pour empêcher le passage du second flux d'eau (Q$_B$) prédéterminé à travers ledit premier orifice de sortie d'eau (4a), alors que le passage d'eau à travers le second orifice de sortie d'eau (5a) reste ouvert pour le second flux d'eau (Q$_B$) prédéterminé, en raison de l'effet du premier flux d'eau (Q$_A$) prédéterminé entrant dans la première chambre de distribution (A) et agissant sur la membrane diaphragme (6), et :

• par la déformation/le déplacement, en l'absence du premier flux d'eau (Q$_A$) prédéterminé entrant dans la première chambre de distribution (A), de la membrane diaphragme (6) en raison de l'effet du second flux d'eau (Q$_B$) prédéterminé entrant dans la seconde chambre de distribution d'eau (B) et agissant sur la membrane diaphragme (6) pour permettre le passage du second flux d'eau (Q$_B$) prédéterminé à travers le premier orifice de sortie d'eau (4a), alors que ladite membrane diaphragme (6) ferme simultanément le passage d'eau du second flux d'eau (Q$_B$) prédéterminé à travers le second orifice de sortie d'eau (5a) de la seconde chambre de distribution d'eau (B).

2. Système de distribution d'eau de lavage selon la revendication 1, dans lequel la membrane diaphragme (6) comprend :

• une première partie de membrane (6a) sous la forme d'une paroi de division divisant la cavité interne (1a) en deux chambres de distribution d'eau (A, B), une face interne de ladite première partie de membrane (6a) étant apte à venir en contact avec le premier orifice de sortie d'eau (4a) de la seconde chambre de distribution d'eau (B) pour fermer le passage d'eau à travers le premier orifice (4a), et

• une tige (9) s'étendant depuis la face interne de la première partie de membrane (6a) pour passer à travers le second orifice de sortie d'eau (5a), ladite tige (9) comprenant une seconde partie de membrane (6b) apte à venir en contact avec le second orifice de sortie d'eau (5a) pour empêcher le second flux (Q$_B$) prédéterminé de passer à travers ledit second orifice de sortie d'eau (5a) lorsque la membrane diaphragme (6) est déformée/déplacée par l'effet du second flux (Q$_B$) prédéterminé entrant dans la seconde chambre de distribution (B) en l'absence du premier flux (Q$_A$) prédéterminé entrant dans la première chambre de distribution (A).

3. Système de distribution d'eau de lavage selon l'une quelconque des revendications 1 à 2, dans lequel la membrane diaphragme (6) comprend un rebord périmétrique (6c) dimensionné pour s'adapter à l'intérieur de la cavité (1a) du corps (1) de la buse (2).

4. Système de distribution d'eau de lavage selon l'une quelconque des revendications 1 à 3, comprenant une pompe centrifuge dimensionnée pour entraîner simultanément les flux (Q$_A$, Q$_B$) prédéterminés des deux chambres de distribution (A, B) à travers les premier et second conduits d'entrée d'eau (7, 8) respectifs des chambres (A, B), dans lequel la courbe de fonctionnement hydraulique du système est conçue pour fournir une distribution des flux (Q$_A$, Q$_B$) prédéterminés qui permet une égalisation de la pression d'eau dans les chambres de distribution (A, B).

5. Système de distribution d'eau de lavage selon l'une quelconque des revendications 1 à 4, dans lequel le premier orifice de sortie d'eau (4a) de la seconde chambre de distribution (B) communique avec un conduit de sortie d'eau (4) des conduits de sortie d'eau (3, 4, 5), lequel conduit (4) est raccordé à une pluralité de canaux de sortie d'eau (4b, 4c, 4d) agencés dans une partie antérieure du corps (1) de la buse (2), le second flux (Q$_B$) prédéterminé de la seconde chambre de distribution (B) étant apte à être distribué hors du corps (1) de la buse (2) à travers ladite pluralité de canaux de sortie (4b, 4c, 4d) afin d'obtenir un jet ou flux d'eau avec un effet de douche périnéale.

**6.** Système de distribution d'eau de lavage selon l'une quelconque des revendications 1 à 3, dans lequel l'au moins un orifice de sortie d'eau (3a) de la première chambre de distribution (A) communique avec un conduit de sortie d'eau (3) des conduits de sortie d'eau (3, 4, 5), lequel premier conduit de sortie (3) est raccordé à au moins un canal de sortie d'eau (3b) agencé dans une partie arrière du corps (1) de la buse (2), dans lequel le premier flux ($Q_A$) prédéterminé de la première chambre de distribution (A) est susceptible d'être distribué hors du corps (1) de la buse (2) à travers ledit au moins un canal de sortie d'eau (3b) afin d'obtenir le premier flux ($Q_A$) prédéterminé approprié pour un lavage anal.

**7.** Système de distribution d'eau de lavage selon la revendication 6, dans lequel le second orifice de sortie d'eau (5a) de la seconde chambre de distribution (B) communique avec le conduit de sortie d'eau (5) des conduits de sortie d'eau (3, 4, 5) qui est raccordé à au moins deux canaux de sortie d'eau (5b, 5c), dans lequel le second flux ($Q_B$) prédéterminé de la seconde chambre de distribution (B) est apte à être distribué hors du corps (1) de la buse (2) à travers à les deux canaux de sortie d'eau (5b, 5c), pendant la distribution simultanée du premier flux ($Q_A$) prédéterminé arrivant de la première chambre de distribution d'eau (A).

**8.** Système de distribution d'eau de lavage selon les revendications 6 et 7, dans lequel le corps (1) de la buse (2) comprend un canal de sortie d'eau (10) agencé pour recevoir simultanément le premier flux ($Q_A$) prédéterminé depuis le conduit de sortie d'eau (3) de la première chambre de distribution (A) et le second flux ($Q_B$) prédéterminé depuis les canaux de sortie d'eau (5b, 5c) du conduit de sortie d'eau (5) depuis la seconde chambre de distribution (B).

**9.** Système de distribution d'eau de lavage selon la revendication 8, dans lequel les deux canaux de sortie (5b, 5c) du conduit de sortie (5) sont agencés de telle sorte qu'ils convergent avec le premier flux ($Q_A$) prédéterminé de la première chambre pour distribuer un flux d'eau turbulent des premier et second flux ($Q_A + Q_B$) prédéterminés avec un effet de pulvérisation à travers le même canal de sortie (10).

**10.** Système de distribution d'eau de lavage selon l'une quelconque des revendications 1 à 9, dans lequel la surface ($S_A$, $S_B$) de la section transversale des canaux de sortie d'eau (3b, 4b, 4c, 4d, 5b, 5c) de chacun des conduits de sortie (3, 4, 5) est conçue en considérant la distribution des premier et second flux ($Q_A$, $Q_B$) prédéterminés dans les deux chambres de distribution (A, B) pour distribuer les premier et second flux ($Q_A$, $Q_B$) prédéterminés avec une pression sensiblement similaire, selon la relation :

- 

$$Q_A/Q_B = S_A/S_B$$

où :

$Q_A$ est le premier flux prédéterminé distribué par la première chambre de distribution (A) ;
$Q_B$ est le second flux prédéterminé distribué par la seconde chambre de distribution (B) ;
$S_A$ est la surface de la section transversale des canaux de sortie d'eau (3b, 10) à travers lesquels le flux ($Q_A$) prédéterminé est distribué ;
$S_B$ est la surface de la section transversale des canaux de sortie d'eau (4b, 4c, 4d ou 5b, 5c) à travers lesquels le second flux ($Q_B$) prédéterminé est distribué.

**11.** Buse de distribution (2) pour une unité de lavage de toilettes avec fonction de bidet, **caractérisée en ce qu'**elle est adaptée pour distribuer de l'eau au moyen du système selon l'une quelconque des revendications 1 à 10.

**12.** Toilettes avec fonctions de bidet, **caractérisées en ce qu'**une unité de lavage desdites toilettes comprend une buse de distribution (2) selon la revendication 11.

**13.** Procédé de distribution d'un flux d'eau prédéterminé au moyen du système selon l'une quelconque des revendications 1 à 10, comprenant, sélectivement, l'étape de :

a) distribution du second flux ($Q_B$) prédéterminé à travers le second orifice de sortie d'eau (5a) de la seconde chambre de distribution d'eau (B) alors qu'un premier orifice de sortie d'eau (4a) de la même chambre de distribution d'eau (B) reste fermé en raison de l'effet du premier flux ($Q_A$) prédéterminé entrant dans la première chambre de distribution (A) sur la membrane diaphragme (6) située dans la cavité (1a) du corps (1) de la buse (2), et l'étape de :
b) déformation/déplacement de la membrane diaphragme (6) située dans la cavité (1a) du corps (1) de la buse (2) par le second flux ($Q_B$) prédéterminé entrant dans la seconde chambre (B), pour distribuer ledit second flux ($Q_B$) prédéterminé à travers le premier orifice de sortie d'eau (4a) de la seconde chambre de distribution d'eau (B), en l'absence du premier flux ($Q_A$) prédéterminé dans la première chambre de distribution (A).

FIG. 1

EP 3 770 350 B1

FIG. 2

FIG. 3

FIG. 4

FIG. 5

FIG. 6

FIG. 7

FIG. 8

**EP 3 770 350 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101664852 B1